# EUROPÄISCHE PATENTSCHRIFT

(11) **EP 2 783 850 B1**
(45) Veröffentlichungstag und Bekanntmachung des Hinweises auf die Patenterteilung: **24.05.2017**
(21) Anmeldenummer: 12839630.6
(22) Anmeldetag: 31.03.2012
(51) Int. Cl.: B32B 27/20, B32B 27/32, B29C 47/06, E04C 2/10, E04C 2/20, E04C 2/24

(54) **HOLZFASER-ALUMINIUM-KUNSTSTOFF-VERBUNDPROFIL UND HERSTELLUNGSVERFAHREN DAFÜR**
WOOD-FIBER ALUMINUM-PLASTIC COMPOSITE PROFILE AND PRODUCING METHOD THEREOF
PROFILÉ EN COMPOSITE DE FIBRES DE BOIS-ALUMINIUM-PLASTIQUE ET SON PROCÉDÉ DE PRODUCTION

(30) Priorität: 14.10.2011 CN 201120392316 U; 14.10.2011 CN 201110313088
(43) Veröffentlichungstag der Anmeldung: 01.10.2014
(73) Patentinhaber: KET Ecolife Holding GmbH, 56068 Koblenz (DE)
(72) Erfinder: Gao, Hong, 51467 Bergisch Gladbach (DE)
(74) Vertreter: Dammertz, Ulrich
(86) Internationale Anmeldenummer: PCT/CN2012/073379
(87) Internationale Veröffentlichungsnummer: WO 2013/053218

(56) Entgegenhaltungen:
- CN-A- 1 966 582
- CN-A- 101 487 561
- CN-Y- 2 791 209
- DE-A1- 4 213 951
- DE-U1-202007 000 266
- JP-A- 2002 144 495
- US-A- 5 591 496
- US-A1- 2010 159 213

## Beschreibung

### Technisches Gebiet

Diese Erfindung betrifft ein Verbundprofil aus Aluminium, Kunststoff und Holzfasern nach dem Oberbegriff gemäß Anspruch 1 und dessen Herstellungsverfahren, und betrifft insbesondere ein Verbundprofil aus Aluminium, Kunststoff und Holzfasern, das unter Verwendung von Altrohstoffen produziert wird, und dessen Herstellungsverfahren.

### Stand der Technik

Ein unter Verwendung von Altkunststoffen hergestelltes Aluminium-Kunststoff-Verbundprofil nach dem Stand der Technik wird aus Altkunststoff, Mineralstoffen, Pflanzenfasern, Zusatzstoffen und weiteren Rohstoffen nach proportionaler Mischung und thermischem Schmelzen mittels eines Extruders durch Extrusion geformt. Das Profil ist dick und schwer, weist eine hohe Festigkeit auf, spart Stahlauskleidungen ein, und ermöglicht für Altkunststoffe und landwirtschaftliche Abfallstoffe ein regeneratives Recycling. Die Abfallstoffe werden wieder genutzt, wobei deren Umwandlung und Nutzung vielfache Vorteile bietet.

Diese Profile weisen jedoch einige Unzulänglichkeiten auf:
1. Da zur Herstellung nicht ein einziger Kunststoff als Rohstoff verwendet wird, sondern die Herstellung der Profile durch einen Verbund von Mineralstoffen, Pflanzenfasern, Zusatzstoffen und weiteren Rohstoffen mit Altkunststoff erfolgt, ist die Beschaffenheit des Profils locker, die Luftdichtheit ist mangelhaft, die Oberfläche ist voller Mikroporen, die Wasserdichtheit und die Wetterbeständigkeit sind mangelhaft. Weitere Nachteile sind dadurch gegeben, dass das Profil unbeständig ist gegen Wind, Sonnenbestrahlung und Regen, und dem Eindringen von Feuchtigkeit und plötzlichen Temperaturwechseln nicht widersteht. Bei Feuchtigkeit entsteht leicht Schimmel. Die Lebensdauer bzw. Haltbarkeit ist kurz.
2. Da zur Herstellung nicht ein einziger Kunststoff als Rohstoff verwendet wird, sondern die Herstellung durch einen Verbund von Mineralstoffen, Pflanzenfasern, Zusatzstoffen und weiteren Rohstoffen mit Altkunststoff erfolgt, sind die Oberfläche des Profils grob und die Farben trüb. Das Profil sieht nicht gut aus. Wenn die äußere Oberfläche mit einer Dekorschicht beklebt wird, ist es schwierig, einen auf die Eigenschaften der Grenzflächen abgestimmten Klebstoff auszuwählen, da die Beständigkeit der Profiloberfläche mangelhaft ist und die Grenzflächen nicht aus einem einzigen Rohstoff gebildet sind. Somit ist die Verbindung nicht fest, sondern kann sich leicht ablösen.

Außerdem hat der Erfinder in dem chinesischen Patent 200510116789.8 (Herstellungsverfahren für ökologische und umweltfreundliche Hohlverbundprofile mit Aluminiumfolie) ein Verfahren zur Herstellung von Aluminium-Kunststoff-Profilen unter Verwendung von thermoplastischen Altkunststoffen offengelegt. Dieses Verfahren umfasst hauptsächlich die folgenden Verfahrensschritte: (1) Auswahl der Rohstoffe, (2) Zerkleinerung und Mischung der Rohstoffe, (3) Extrusion von bandförmigen Gemischen, (4) Formen von Halbzeugprofilen, (5) mechanische Bearbeitung der Profile, (6) Beschichtung, und (7) Aufbringen einer Metallbeschichtung. Gleichwohl ist durch die Produktion festgestellt worden, dass dieses Verfahren einige Nachteile aufweist, die nachfolgend im Detail beschrieben sind:
1. Im Rohstoff sind keine mineralischen Füllstoffe vorhanden, wobei die Mischung lediglich auf der Basis von Pflanzenfasern und Kunststoff erfolgt. Die Pflanzenfasern können zwar die Zugkraft und die Biegsamkeit erhöhen, zeigen jedoch eine hohe Sprödigkeit, eine geringe Festigkeit und eine schlechte Wetterfestigkeit. Die Pflanzenfasern sind in hohem Maße durch Sonnenlicht und Feuchtigkeit beeinflusst, haben eine geringe Alterungsbeständigkeit und sind anfällig gegenüber Bruch.
2. Es werden ungeeignete Rohstoffe ausgewählt. Falls Polystyrol (PS) und Polyethylen niedriger Dichte (LDPE) als Rohstoff gewählt werden, kann dies dazu führen, dass die Produkte problematisch sind, wegen einer geringen Festigkeit, verkürzten Lebensdauer, leichter Ablösung der Aluminiumbeschichtung und einer unzuverlässigen Verbindung bzw. Anhaftung.
3. Das Produktionsverfahren ist umständlich. Im Schritt 3 des Verfahrens ist das nach der Extrusion mit dem Extruder gewonnene Profil ein Halbzeug, das anschließend noch mit einer Walze beschichtet werden muss (Schritt 6). Das mechanisch bearbeitete und geformte Hohlkörperprofil wird in ein Beschichtungsrohr geschickt, und nach der teilweisen Aushärtung in einem Kühltank erfolgt die gleichmäßige Vakuumbeschichtung. Zur Verwendung einer Walze für die Beschichtung ist es ausserdem erforderlich, zunächst in Schritt 4 ein Formen des Halbzeugprofils, und dann in Schritt 5 eine mechanische Bearbeitung des Profils durchzuführen, um die Abmessungen des Profils anzupassen. Erst hiernach kann Schritt 6 durchgeführt werden, indem das Profil in das Beschichtungsrohr gefördert wird. Nachteilig bei diesem Verfahren ist, dass eine solche Anlage zahlreiche Komponenten aufweist und das Produktionsverfahren kompliziert ist. Selbst bei Anwendung eines solch aufwendigen Verfahrens können der Kern (das in Schritt 3 gewonnene Profilhalbzeug) und die metallische Aluminiumfolie der äußeren Schichten negativ beeinflusst werden, weil die Beschichtungsmaterialien nicht sorgfältig ausgewählt sind.

Bezüglich des Kerns sind die thermoplastischen Eigenschaften nicht übereinstimmend, da der in Schritt 3 als Rohstoff gewählte Kunststoff und der in Schritt 6 als Rohstoff gewählte Kunststoff verschieden sind. Somit kann für die Verbindung kein Klebstoff verwendet werden, sondern es kann nur eine Walzmaschine gewählt werden, um mit einer Heißwalze die Beschichtung aufzubügeln. Hierbei ist es nicht möglich, den Kern mit dem Beschichtungsmaterial zuverlässig zu einem Ganzen zu verbinden.

Bezüglich der Schicht aus metallischer Aluminiumfolie der äußeren Schichten können ebenfalls Probleme auftreten, weil die in Schritt 6 als Rohstoff gewählten Kunststoffe weder von einem einzigen Typ noch Neukunststoff sind, sondern aus regeneriertem Altkunststoff bestehen (Altkunststoff ist ein Kunststoff mit unterschiedlichen Farben, wohingegen Neukunststoff weiß oder transparent ist). Die hieraus resultierenden Probleme bestehen darin, dass es mit den derzeit verfügbaren Klebstoffen schwierig ist, die Aluminiumfolie mit dem Altkunststoff mit gemischten Farben bzw. Farbstoffen zu verbinden. Aufgrund der Verschiedenartigkeit der Rohstoffe für die Beschichtung zeigen die Oberflächen des Materials eine mangelhafte Materialbeständigkeit, sind rau und weisen eine Vielzahl von Mikroporen auf, was eine feste Verbindung mit einem Klebemittel erschwert. Des Weiteren kommt es zu einer leichten Ablösung und zur Blasenbildung, was zusätzlich die Integrität und Qualität der Profile beeinträchtigt. Bei einem nochmaligen Recycling führt die getrennte Erfassung der Rohstoffe (wegen der unterschiedlichen thermischen Schmelzpunkte der Rohstoffe) zu einem unsachgemäßen Recycling, was nachteilig für den Umweltschutz ist. Außerdem sind die Wetterfestigkeit der Produkte mangelhaft, die Einflüsse durch Sonnenlicht und Feuchtigkeit stark, die Alterungsbeständigkeit gering, und die Bruchneigung hoch.

Aus US 2010/0159213 A1 ist ein koextrudiertes Verbundprofil nach dem Oberbegriff von Anspruch 1 bekannt. Hierbei ist ein Kern vollständig von einer Schutzschicht umhüllt. Die Schutzschicht besteht aus einer Kunststoffmischung mit einem lonomer, wobei das lonomer für den Kern die Funktion einer schützenden Komponente übernimmt, um z.B. Farbechtheit zu gewährleiten und Schutz gegen Kratzer und Verschmutzungen zu bieten.

### Gegenstand der Erfindung

Zur Lösung der genannten Probleme besteht eine Aufgabe der vorliegenden Erfindung darin, ein Verbundprofil aus Aluminium, Kunststoff und Holzfasern zu schaffen. Ein solches Produkt hat ein ansprechendes Erscheinungsbild, eine gute Wetterfestigkeit, ist beständig gegen Wasser und Feuchtigkeit, kann mit einer Dekorschicht fest verbunden werden, zeigt keine Ablösungen, und hat eine lange Lebensdauer und eine hohe Alterungsbeständigkeit.

Eine weitere Aufgabe der vorliegenden Erfindung besteht darin, ein Herstellungsverfahren für ein Verbundprofil aus Aluminium, Kunststoff und Holzfasern zu schaffen. Mit diesem Verfahren werden mittels Coextrusion hochqualitative Bauprofile erzeugt, die eine feste Verbindung, lange Lebensdauer, lange Haltbarkeit und einen breiten Anwendungsbereich aufweisen.

Um die genannten Aufgaben zu realisieren, verwendet die vorliegende Erfindung folgende technische Lösung:
Ein Verbundprofil aus Aluminium, Kunststoff und Holzfasern umfasst einen Kern, der aus Mineralstoffen, Pflanzenfasern, Zusatzstoffen und Altkunststoff eines einzigen Typs gebildet ist, wobei an der äußeren Oberfläche des Kerns eine Schutzschicht angeordnet ist, die die äußere Oberfläche des Kerns vollständig umhüllt und aus einer Schicht aus Neukunststoff eines einzigen Typs gebildet ist.. Der Kunststoff der Schutzschicht und der Kunststoff des Kerns sind vom gleichen Typ. Der Kern und die Schutzschicht sind nach dem Prinzip der Coextrusion hergestellt, wobei der Kern und die Schutzschicht allein durch das Herstellungsverfahren nach dem Prinzip der Coextrusion einstückig miteinander verbunden sind. Die Außenseite der Schutzschicht ist mit einer Dekorschicht aus Aluminiumfolie beklebt.

Des Weiteren sieht die Erfindung ein Herstellungserfahren für ein Verbundprofil aus Aluminium, Kunststoff und Holzfasern vor, das folgende Stufen umfasst:
Eine erste Stufe zur Rohstoff-Vorbereitung, mit folgenden Schritten:
   (1) Auswahl von Altkunststoff oder Neukunststoff als Haupt-Rohstoff, wobei es sich bei dem Haupt-Rohstoff um ein beliebiges Material aus der Gruppe bestehend aus Polypropylen, Polyethylen, Polyvinylchlorid und HDPE handelt,
   (2) Auswahl von Pflanzenfasern als Hilfs-Rohstoff, wobei die Pflanzenfasern in einem Mahlwerk zu einem Mehl mit 0,42 mm - 0,18 mm [40 - 80 Mesh] zerkleinert werden,
   (3) Bereitstellen von Mineralpulver von 0,0481 mm - 0,0172 mm [300 - 800 Mesh] als Füllstoff,
   (4) Auswahl einer chemischen Reagenz mit Kopplungswirkung als Zusatzstoff;
   eine zweite Stufe zum Mischen von Materialien,
   wobei 30-55 Gewichtsprozent an Haupt-Rohstoff, 38-55 Gewichtsprozent an Hilfs-Rohstoff, 5-30 Gewichtsprozent an Füllstoff und 2-6 Gewichtsprozent an Zusatzstoff in eine Mischeinrichtung gefüllt und erhitzt und mechanisch vermischt werden, und anschließend zu Granulat verarbeitet werden, als Ausgangsmaterial für die Produktion des Kerns eines Profilkörpers;
   eine dritte Stufe zur Produktion des Profilkörpers in einer Coextrusionsanlage, mit folgenden Schritten:
   Einbringen des in der zweiten Stufe erhaltenen Ausgangsmaterials in einen Trichter eines Extruders für die Produktion des Kerns des Profilkörpers,
   gleichzeitiges Einbringen eines Neukunststoffs vom gleichen Typ wie der Haupt-Rohstoff in einen anderen Trichter des Extruders als Ausgangsmaterial für die Schutzschicht,
   Starten des Extruders,
   Extrudieren des geschmolzenen Ausgangsmaterials für den Kern und des geschmolzenen Ausgangsmaterials für die Schutzschicht nach dem Prinzip der Coextrusion unter Verwendung eines Coextrusionswerkzeugs, um die Extrusion des Kerns und der Schutzschicht synchron zu realisieren, und
   anschließendes Abkühlen und Ausformen in einer Kühl- und Formanlage zur Erzeugung des Profilkörpers,
   wobei der Kern und die Schutzschicht während der Coextrusion aufgrund übereinstimmender thermoplastischer Eigenschaften zu einem integrierten Körper fest verbunden werden.

Nach Abschluss der dritten Stufe weist das Verfahren eine vierte Stufe für eine Folienkaschierung auf, mit folgenden Schritten:
Auftragen eines Klebstoffs auf eine Aluminiumfolie oder eine Holzdekorfolie,
Anordnen der Aluminiumfolie oder der Holzdekorfolie an einer Arbeitsposition einer Kaschiermaschine,
Anordnen des in der dritten Stufe produzierten Profilkörpers auf einer Gleitbahn in einem Einlassbereich der Kaschiermaschine,
Hineinführen des Profilkörpers in die Kaschiermaschine durch Antriebsmittel, Verbinden der Aluminiumfolie oder der Holzdekorfolie mit dem Profilkörper in der Kaschiermaschine mittels Heisskleber, und
Austragen des Profilkörpers als ein fertiges Produkt mit einer Dekorschicht.

Die Pflanzenfasern sind aus einem Material oder mehreren Materialien aus der Gruppe bestehend aus Baummaterial, Bambus, Sägespänen, Reisstroh, Flachs, Ramie und Stielen gewählt.

Die Mineralpulver sind aus einem Material oder zwei Materialien aus der Gruppe bestehend aus Kalk, Asbest, Glimmer, Kreide, Talk, Kalziumkarbonat und Glasfasern gewählt.

Das Verbundprofil aus Aluminium, Kunststoff und Holzfasern nach der vorliegenden Erfindung weist folgende Vorteile auf;
Der erfindungsgemäße Profilkörper besteht aus dem Kern und einer Schutzschicht. Hierbei übernimmt die Schutzschicht die Funktion einer Grenzfläche, wodurch vorteilhaft sowohl die Innen- als auch die Außenseite des Kerns geschützt sind. Für den Kern bildet die Schutzschicht eine äußere Grenzfläche, die den Kern vollständig umhüllt. Die Schutzschicht wird unter Verwendung eines reinen Kunststoffs (Neukunststoff, aus einem einzigen Typ) hergestellt. Die Eigenschaften des reinen Kunststoffs sind wie folgt: blasenfrei, stabil, hohe Zähigkeit, gute Luftdichtheit, gute Wasserdichtheit, gute Wetterbeständigkeit, gute Beständigkeit gegen Wind, Sonnenbestrahlung und Regen, und widerstandsfähig gegen Feuchtigkeit und plötzliche Temperaturwechsel. Zudem kann eine solche Schutzschicht den Kern sehr gut schützen. Der Kunststoff der Schutzschicht und der Kunststoff des Kerns sind vom gleichen Typ. Obschon der eine Kunststoff aus Altkunststoff und der andere Kunststoff aus Neukunststoff besteht, weisen beide Kunststofftypen jedoch gleiche thermoplastische Eigenschaften auf, so dass sie mittels Coextrusion integrativ miteinander verbunden werden können. Dies vereinfacht den Herstellungsprozess und erhöht den Produktionsdurchsatz.

Die Schutzschicht wird aus einer reinen Kunststoffschicht gebildet, deren äußere Oberfläche ästhetisch und ansprechend ist. Hierbei wird der Kern mit seiner rauen Oberfläche und dunklen Farben vollständig verdeckt. Hiermit wird ein anspruchsvolles Erscheinungsbild für das Profil erreicht.

Die Schutzschicht übernimmt für die äußere Dekorschicht die Funktion einer inneren Grenzfläche. Da die Schutzschicht aus reinem Kunststoff (Neukunstoff, aus einem einzigen Typ) hergestellt wird, ist es sehr einfach, einen auf die Eigenschaften der Schutzschicht abgestimmten Klebstoff für das Bekleben mit der äußeren Dekorschicht auszuwählen. Diese Verbindung ist fest und löst sich nicht leicht ab.

Das Herstellungsverfahren nach der vorliegenden Erfindung weist folgende Vorteile auf:
1. Zu den Rohstoffen werden mineralische Füllstoffe hinzugefügt. Während die Zugkraft und die Elastizität durch das Mischen von Pflanzenfasern und Kunststoff verbessert werden, führt das Hinzufügen von mineralischen Füllstoffen zu einer Verbesserung der Festigkeit und Schlagzähigkeit des Profils, wodurch die Elastizität des Profils weiter erhöht wird, so dass das Profil nicht leicht bricht.
2. Die Auswahl der Materialien erfolgt stärker unter naturwissenschaftlichen Gesichtspunkten, mit entsprechend besserer Eignung und Genauigkeit. Des Weiteren folgt die Materialauswahl den Grundsätzen chemischer Reaktionen von Polymeren. Hinsichtlich der Auswahl von Kunststofftypen für den Kern werden nur Rohstoffe von einem einzigen Kunststofftyp anstatt einer Vielzahl von Kunststoff-Rohstoffen verwendet. Hierzu bestehen folgende Zielsetzungen:

Erstens gibt es nur einen einzigen Schmelzpunkt, was das getrennte Erfassen der Rohstoffe beim erneuten Recycling erleichtert, das Recycling vereinfacht und dem Umweltschutz dient. Zweitens stimmen die thermoplastischen Eigenschaften überein, was das Anhaften einer Schutzschicht mit Schutzwirkung für den Kern mittels Coextrusion vereinfacht. Der Schutzfilm und der Kern weisen die gleichen thermoplastischen Eigenschaften auf, was zu einer festen Verbindung führt und die Notwendigkeit eines Laminierens durch Heisswalzen und Aufbügeln mittels einer Walzmaschine entbehrlich macht. Die Ausbildung eines Schutzfilms für den Kern mittels Coextrusion ist signifikant besser als ein Schutzfilm, der nach dem Verfahren des Laminierens gebildet wird. Eine nach dem Prinzip der Coextrusion gebildete Schutzschicht für den Kern weist bessere Eigenschaften in Bezug auf Regenschutz, Feuchtigkeitsschutz, Schallisolierung und Windbeständigkeit auf, wobei gleichzeitig die Luftdichtheit verbessert wird und die Wetterfestigkeit gut ist.

Da für die Schutzschicht ein Kunststoff nur von einem einzigen Typ verwendet wird und es sich hierbei um Neukunststoff handelt, ist die Materialqualität einheitlich, wobei keine Verunreinigungen enthalten sind. Für das Kaschieren der äußeren Schichten (Arbeitsgang Dekorschicht) ist dies ebenfalls vorteilhaft. Diesbezüglich bestehen auch Vorteile für die Auswahl eines geeigneten Klebstoffs zum Ankleben der Dekorschicht, die sich nicht leicht ablöst, keine Luftblasen bildet und sich nicht ohne Weiteres abschält.

In gleicher Weise werden hierdurch die Komplexität des Verfahrens verringert, Energie eingespart und der Umweltschutz beachtet. Dies wirkt sich auch günstig auf die Produktionskosten und die Verbreitung der Erfindung aus.

Der wesentliche Vorteil der vorliegenden Erfindung besteht darin, dass ein Coextrusionsverfahren vorgeschlagen wird, um die Schutzschicht mit der Oberfläche des Kerns zu verbinden. Für verschiedene Typen von Kunststoffen ist es problematisch, das Coextrusionsverfahren durchzuführen. Deshalb müssen für den Kern und die Schutzschicht Kunststoffe vom gleichen Typ ausgewählt werden.

### Kurzbeschreibung der Zeichnungen

Es zeigen:
- Figur 1: eine schematische Darstellung des Aufbaus des Profilkörpers nach der vorliegenden Erfindung;
- Figur 2: eine vergrößerte Darstellung des Teils A von Fig. 1;
- Figur 3: eine schematische Darstellung des in Zeichnung 1 gezeigten Profilkörpers vor der Verbindung mit der Dekorschicht;
- Figur 4: eine Seitenansicht von Figur 3;
- Figur 5: eine schematische Darstellung des in Figur 1 gezeigten Profilkörpers nach der Verbindung mit der Dekorschicht;
- Figur 6: eine vergrößerte Darstellung des Teils B von Figur 5.

### Ausführliche Beschreibung von konkreten Ausführungsformen

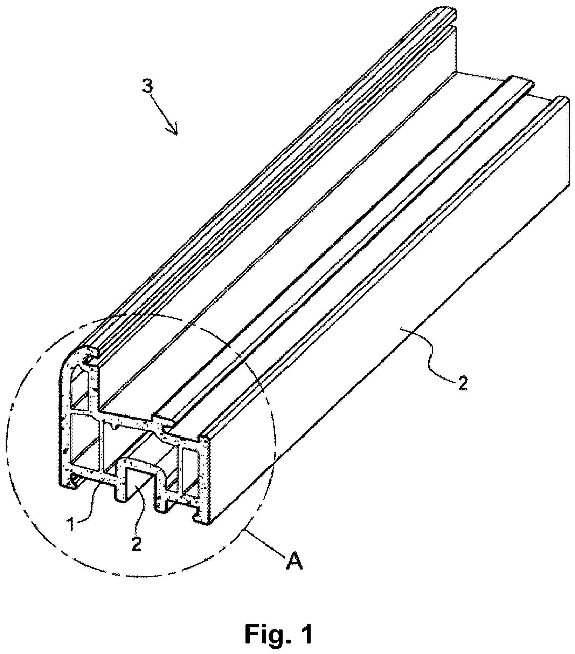

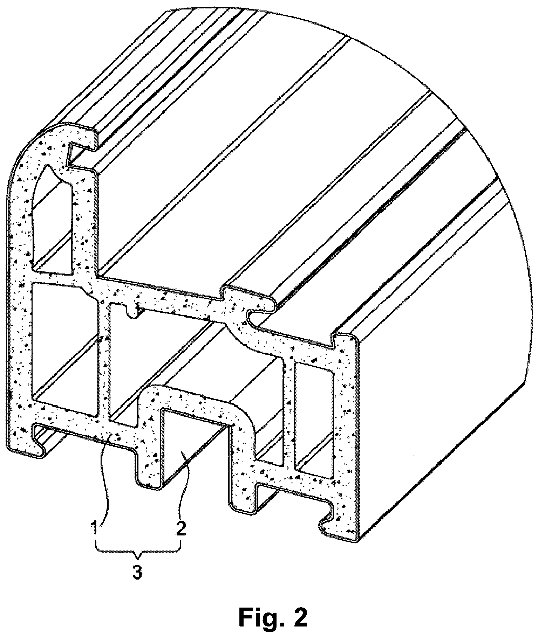

Wie in den Figuren 1 und 2 gezeigt, umfasst ein erfindungsgemäßes Verbundprofil aus Aluminium, Kunststoff und Holzfasern einen Kern 1. Dieser Kern 1 wird aus Mineralstoffen, Pflanzenfasern, Zusatzstoffen, die eine Kopplungswirkung ausüben, sowie aus Altkunststoff aus einem einzigen Typ gebildet. Bei den Pflanzenfasern kann es sich um ein Material oder Materialien aus der Gruppe bestehend aus Baummaterial, Bambus, Sägespänen, Reisstroh, Flachs und Ramie handeln. Bei dem Mineralpulver kann es sich um ein Material oder zwei Materialien aus der Gruppe bestehend aus Kalk, Asbest, Glimmer, Kreide und Glasfasern handeln. Bei dem Zusatzstoff handelt es sich um Maleinsäure-anhydrid, gemeinhin MSA genannt. Die äußere Oberfläche des Kerns 1 ist mit einer Schutzschicht 2 versehen. Die Schutzschicht 2 besteht aus einer reinen Kunststoffschicht, wobei die Schutzschicht 2 die äußere Oberfläche des Kerns 1 vollständig umhüllt und die Schutzschicht 2 und der Kern 1 einen Profilkörper 3 bilden.

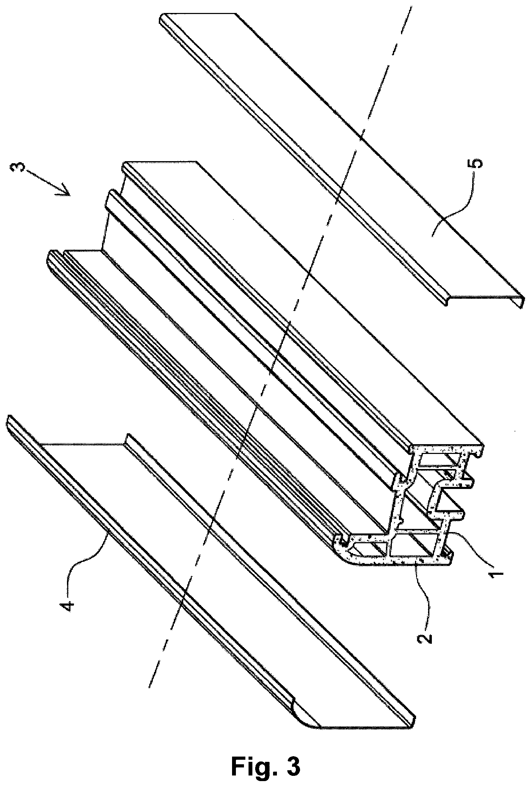

Nachstehend wird Bezug genommen auf die Figuren 3 bis 6. An den beiden Seiten (Raumaußenseite und Rauminnenseite) des Profilkörpers 3 sind Dekorschichten 4 und 5 angebracht. Die Dekorschichten 4 und 5 können aus Aluminiumfolie gebildet sein.

Bei dem Kunststofftyp für den Kern 1 kann es sich um ein beliebiges Material aus der Gruppe bestehend aus Polypropylen (PP), Polyethylen (PE), Polyvinylchlorid (PVC) und Polyethylen hoher Dichte (HDPE) handeln.

Der Kunststofftyp für die Schutzschicht 2 und der Kunststofftyp für den Kern 1 sind gleich. Falls zum Beispiel für den Kern 1 der Kunststoff Polypropylen (PP) (Altkunststoff) verwendet wird, besteht die Schutzschicht 2 aus einer Schicht aus reinem Polypropylen (PP) (Neukunststoff).

Falls für den Kern 1 der Kunststoff Polyethylen (PE) (Altkunststoff) verwendet wird, besteht die Schutzschicht 2 aus einer Schicht aus reinem Polyethylen (PE) (Neukunststoff).

Falls für den Kern 1 der Kunststoff Polyvinylchlorid (PVC) (Altkunststoff) verwendet wird, besteht die Schutzschicht 2 aus einer Schicht aus reinem Polyvinylchlorid (PVC) (Neukunststoff).

Falls für den Kern 1 der Kunststoff Polyethylen hoher Dichte (HDPE) (Altkunststoff) verwendet wird, besteht die Schutzschicht 2 aus einer Schicht aus reinem Polyethylen hoher Dichte (HDPE) (Neukunststoff).

Die Schutzschicht 2 übernimmt die Funktion einer Grenzfläche, wodurch vorteilhaft sowohl die Innen- als auch die Außenseite des Kerns 3 geschützt sind. Die Schutzschicht 2 bildet die äußere Grenzfläche des Kerns 1. Deshalb wird für die Herstellung der Schutzschicht 2 reiner Kunststoff (Neukunststoff, aus einem einzigen Typ) verwendet. Die Beschaffenheit des reinen Kunststoffs ist blasenfrei und stabil. Er hat eine hohe Zähigkeit, eine gute Luftdichtheit, eine gute Wasserdichtheit, eine gute Wetterbeständigkeit, und ist beständig gegen Wind, Sonnenbestrahlung und Regen. Zudem kann er Feuchtigkeit und plötzlichen Temperaturwechseln widerstehen, und kann den Kern 1 wirksam schützen. Der Kunststofftyp für die Schutzschicht 2 und der Kunststofftyp für den Kern 1 sind gleich. Obschon der eine Kunststoff aus Neukunststoff und der andere Kunststoff aus Altkunststoff besteht, weisen beide Kunststoffe jedoch gleiche thermoplastische Eigenschaften auf, so dass sie im Produktionsprozess sehr einfach miteinander verbunden werden. Dies vereinfacht den Herstellungsprozess und erhöht den Produktionsdurchsatz.

Die Schutzschicht 2 wird aus einer reinen Kunststoffschicht mit einem ansprechenden äußeren Erscheinungsbild gebildet, die den Kern 1 mit rauer Oberfläche und dunklen Farben vollständig verdeckt. Hierdurch wird ein ansprechenderes Erscheinungsbild für den Kern 1 erreicht.

Die Schutzschicht 2 übernimmt für die äußeren Dekorschichten 4 und 5 die Funktion einer inneren Grenzfläche. Da die Schutzschicht 2 aus reinem Kunststoff (Neukunststoff, aus einem einzigen Typ) hergestellt wird, ist es sehr einfach, einen auf ihre Eigenschaften abgestimmten Klebstoff für das Bekleben mit den äußeren Dekorschichten 4 und 5 auszuwählen. Diese Verbindung ist fest und löst sich nicht ohne Weiteres ab.

Das Verfahren zur Herstellung eines Verbundprofils aus Aluminium, Kunststoff und Holzfasern nach der vorliegenden Erfindung kann nach folgenden konkreten Ausführungsformen ausgestaltet sein:

### Ausführungsbeispiel 1:

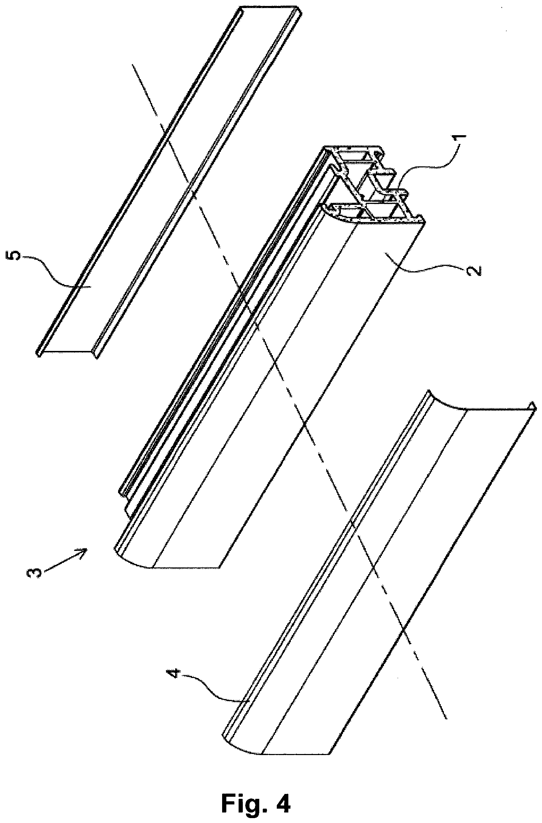

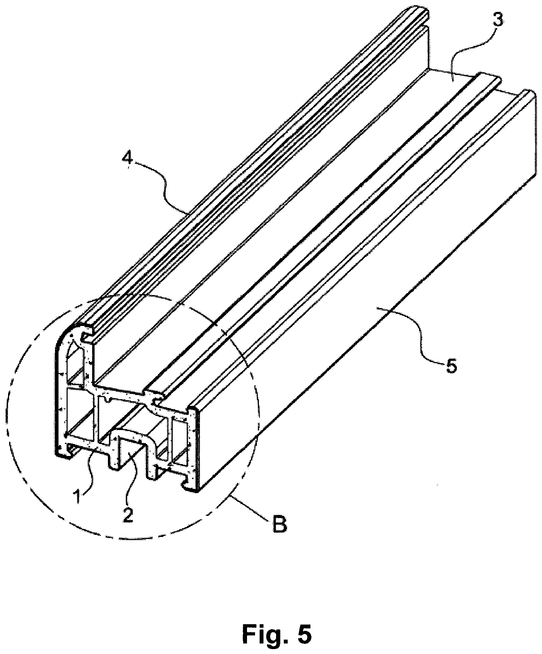

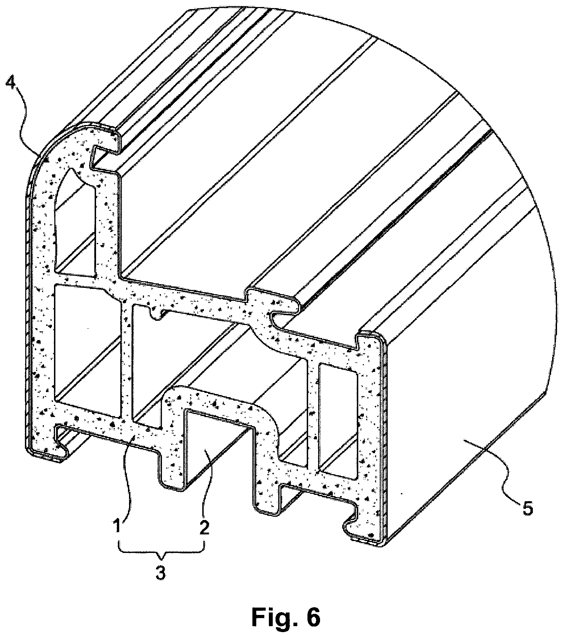

Erfindungsgemäß ist ein Herstellungsverfahren für Verbundprofile aus Aluminium, Kunststoff und Holzfasern vorgesehen, umfassend folgende Stufen:
Eine erste Stufe zur Rohstoff-Vorbereitung, mit folgenden Schritten:
   (1) Auswahl von thermoplastischem Altkunststoff aus Polypropylen (PP) als Haupt-Rohstoff, wobei es sich bei dem Haupt-Rohstoff um zurückgewonnene Kunststoffflaschen, Kunststoffröhren, Kunststoffbecher und andere Kunststoffbehälter handeln kann, die alle aus Polypropylen (PP) bestehen. Die genannten Kunststoffflaschen, Kunststoffröhren und Kunststoffbecher werden mit einer Zerkleinerungsmaschine zerkleinert, und anschließend mit einem Extruder zu kugelförmigem Kunststoffgranulat (als Haupt-Rohstoff) mit einer homogenen Größe für eine spätere Verwendung extrudiert. Der Kugeldurchmesser des Kunststoffgranulats beträgt 2 mm.
   (2) Auswahl von Pflanzenfasern als Hilfs-Rohstoff, wobei es sich bei den Pflanzenfasern um Sägemehl handelt, das in einem Mahlwerk zu einem Mehl mit 0,42 mm [40 Mesh] zerkleinert wird.
   (3) Bereitstellen von Mineralpulver von 0,0481 mm [300 Mesh] als Füllstoff, wobei es sich bei dem Mineralpulver um Glasfaserpulver handelt.
   (4) Auswahl einer chemischen Reagenz mit Kopplungswirkung als Zusatzstoff, wobei es sich bei dem Zusatzstoff um Maleinsäureanhydrid (MSA) handelt.
Eine zweite Stufe zum Mischen von Materialien:
   Hierbei werden 50 Gewichtsprozent an Polypropylen (PP) als Haupt-Rohstoff, 40 Gewichtsprozent an Sägemehl als Hilfs-Rohstoff, 6 Gewichtsprozent an Glasfasermehl als Füllstoff und 4 Gewichtsprozent an Maleinsäureanhydrid als Zusatzstoff in eine Mischeinrichtung gefüllt, erhitzt und mechanisch vermischt, und anschließend mit einem Extruder zu rundem Kunststoffgranulat mit einer homogenen Größe extrudiert, zur späteren Verwendung als Ausgangsmaterial für die Produktion des Kerns eines Profilkörpers. Der Kugeldurchmesser des Kunststoffgranulats beträgt 3 mm.
Eine dritte Stufe zur Produktion des Profilkörpers in einer Produktionslinie mit Coextrusionsanlagen:
   Die Produktionslinie mit Coextrusionsanlagen umfasst zwei große Teile. Der erste Teil ist ein Extruder mit einer Einschnecke oder einer Doppelschnecke. Am Ausgang des Extruders ist ein Coextrusionswerkzeug vorgesehen, bei dem es sich um ein ummantelndes Profilwerkzeug handelt. Der zweite Teil ist eine Kühl- und Formanlage.
   Das in der zweiten Stufe erhaltene Ausgangsmaterial wird für die Produktion des Kerns des Profilkörpers in einen Trichter des Extruders eingebracht. Gleichzeitig wird ein mit dem Material des Haupt-Rohstoffs gleicher Kunststoff (Neukunststoff) als Ausgangsmaterial für die Schutzschicht in einen anderen Trichter des Extruders gegeben, wobei es sich bei dem Ausgangsmaterial für die Schutzschicht um Neukunststoff (reiner Kunststoff) des Materials Polypropylen (PP) handelt. Anschließend wird der Extruder gestartet. Unter Verwendung eines Coextrusionswerkzeugs werden das thermisch geschmolzene Ausgangsmaterial für den Kern und das Ausgangsmaterial für die Schutzschicht nach dem Prinzip der Coextrusion extrudiert, um die Extrusion des Kerns und der Schutzschicht synchron zu realisieren. Während der Coextrusion gehen der Kern 1 und die Schutzschicht 2 aufgrund übereinstimmender thermoplastischer Eigenschaften eine enge Verbindung zu einer Einheit ein, wie in den Figuren 1 und 2 gezeigt, mit den Vorzügen einer festen Verbindung, einer hohen Festigkeit, einer Schallisolierung, einer guten Wärmedämmung, einer guten Luftdichtheit und Wasserdichtheit. Nach Abkühlung und Formgebung in der Kühl- und Formanlage ist der Profilkörper 3 ausgebildet.
Eine vierte Stufe zur Durchführung einer Kaschierung:
   Beim Kaschieren werden die Dekorschichten 4 und 5 an dem Profilkörper 3 angebracht. Wie in den Figuren 3 und 4 gezeigt, sind die zu kaschierenden Oberflächen des Profilkörpers 3 dessen Raumaußenseite und Rauminnenseite. Bei diesem Ausführungsbeispiel sind die Dekorschichten 4 und 5 aus Aluminiumfolie ausgebildet.
   Auf die Aluminiumfolie 4, 5 wird ein Klebstoff aufgetragen, die Aluminiumfolie wird an einer Arbeitsposition einer Kaschiermaschine angeordnet, wobei dann der Profilkörper 3 auf einer Gleitbahn in einem Einlassbereich der Kaschiermaschine angeordnet wird und durch Antriebsmittel in die Kaschiermaschine hineingelangt. Die Aluminiumfolie 4, 5 verbindet sich in der Kaschiermaschine mittels Heisskleber mit dem Profilkörper 3, der als fertiges Produkt wie in den Figuren 5 und 6 gezeigt ausgebracht wird.

### Ausführungsbeispiel 2:

Erfindungsgemäß handelt es sich um ein Herstellungsverfahren für Verbund-profile aus Aluminium, Kunststoff und Holzfasern, umfassend folgende Stufen:
Eine erste Stufe zur Rohstoff-Vorbereitung, mit folgenden Schritten:
   (1) Auswahl von thermoplastischem Altkunststoff aus Polyethylen (PE) als Haupt-Rohstoff, wobei es sich bei dem Haupt-Rohstoff um zurückgewonnene Kunststoffflaschen, Kunststoffröhren, Kunststoffbecher und andere Kunststoffbehälter handeln kann, die alle aus Polyethylen (PE) bestehen. Diese Kunststoffflaschen, Kunststoffröhren und Kunststoffbecher werden mit einer Zerkleinerungsmaschine zerkleinert, und anschließend mit einem Extruder zu kugelförmigem Kunststoffgranulat (als Haupt-Rohstoff) mit einer homogenen Größe für eine spätere Verwendung extrudiert. Der Kugeldurchmesser des Kunststoffgranulats beträgt 3 mm.
   (2) Auswahl von Pflanzenfasern als Hilfs-Rohstoff, wobei es sich bei den Pflanzenfasern um Bambusmehl handelt, das in einem Mahlwerk zu einem Mehl mit 0,297 mm [50 Mesh] zerkleinert wird.
   (3) Bereitstellen von Mineralpulver von 0,037 mm [400 Mesh] als Füllstoff, wobei es sich bei dem Mineralpulver um Asbestpulver handelt.
   (4) Auswahl einer chemischen Reagenz mit Kopplungswirkung als Zusatzstoff, wobei es sich bei dem Zusatzstoff um Maleinsäureanhydrid (gemeinhin als MSA bekannt) handelt.
Eine zweite Stufe zum Mischen von Materialien:
   Hierbei werden 55 Gewichtsprozent an Polyethylen (PE) als Haupt-Rohstoff, 38 Gewichtsprozent an Bambusmehl als Hilfs-Rohstoff, 5 Gewichtsprozent an Asbestpulver als Füllstoff, und 2 Gewichtsprozent an Maleinsäureanhydrid als Zusatzstoff in eine Mischeinrichtung gefüllt, erhitzt und mechanisch vermischt, und anschließend mit einem Extruder zu rundem Kunststoffgranulat mit einer homogenen Größe extrudiert, zur späteren Verwendung als Ausgangsmaterial für die Produktion des Kerns des Profilkörpers. Der Kugeldurchmesser des Kunststoffgranulats beträgt 4 mm.
Eine dritte Stufe zur Produktion des Profilkörpers in einer Produktionslinie mit Coextrusionsanlagen:
   Die Produktionslinie der Coextrusionsanlage umfasst zwei große Teile. Der erste Teil ist ein Extruder mit einer Einschnecke oder einer Doppelschnecke. Am Ausgang des Extruders ist ein Coextrusionswerkzeug montiert, bei dem es sich um ein ummantelndes Profilwerkzeug handelt. Der zweite Teil ist eine Kühl- und Formanlage.
   Das in der zweiten Stufe erhaltene Ausgangsmaterial für die Produktion des Kerns des Profilkörpers wird in einen Trichter des Extruders eingebracht. Gleichzeitig wird ein mit dem Material des Haupt-Rohstoffs übereinstimmender Kunststoff (Neukunststoff) als Ausgangsmaterial für die Schutzschicht in einen anderen Trichter des Extruders eingebracht, wobei es sich bei dem Ausgangsmaterial für die Schutzschicht um Neukunststoff (reiner Kunststoff) des Materials Polyethylen (PE) handelt. Der Extruder wird gestartet. Unter Verwendung eines Coextrusionswerkzeugs werden das thermisch geschmolzene Ausgangsmaterial für den Kern und das Ausgangsmaterial für die Schutzschicht nach dem Prinzip der Coextrusion extrudiert, um die Extrusion des Kerns und der Schutzschicht synchron zu realisieren. Während der Coextrusion gehen der Kern 1 und die der Schutzschicht 2 aufgrund übereinstimmender thermoplastischer Eigenschaften eine enge Verbindung zu einer Einheit ein, wie in Zeichnung 1 und Zeichnung 2 gezeigt, mit den Vorzügen einer festen Verbindung, einer hohen Festigkeit, einer Schallisolierung, einer guten Wärmedämmung, und einer guten Luftdichtheit und Wasserdichtheit. Nach Abkühlung und Formgebung in der Kühl- und Formanlage ist der Profilkörper 3 ausgebildet.
Eine vierte Stufe zur Durchführung einer Kaschierung:
   Beim Kaschieren werden die Dekorschichten 4 und 5 an dem Profilkörper 3 angebracht. Wie in den Figuren 3 und 4 gezeigt, sind die zu kaschierenden Oberflächen des Profilkörpers 3 dessen Raumaußenseite und Rauminnenseite. Bei diesem Ausführungsbeispiel sind die Dekorschichten 4 und 5 aus Aluminiumfolie ausgebildet.

Auf die Aluminiumfolie 4, 5 wird ein Klebstoff aufgetragen, die Aluminiumfolie wird an einer Arbeitsposition einer Kaschiermaschine angeordnet, wobei dann der Profilkörper 3 auf einer Gleitbahn in einem Einlassbereich der Kaschiermaschine angeordnet wird und durch Antriebsmittel in die Kaschiermaschine hineingelangt. Die Aluminiumfolie 4, 5 verbindet sich in der Kaschiermaschine mittels Heisskleber mit dem Profilkörper 3, der als fertiges Produkt wie in den Figuren 5 und 6 gezeigt ausgebracht wird.

### Ausführungsbeispiel 3:

Erfindungsgemäß handelt es sich um ein Herstellungsverfahren für Verbundprofile aus Aluminium, Kunststoff und Holzfasern, umfassend folgende Stufen:
Eine erste Stufe zur Rohstoff-Vorbereitung:
   (1) Auswahl von thermoplastischem Altkunststoff aus dem Material Polyethylen hoher Dichte (HDPE) als Haupt-Rohstoff, wobei es sich bei diesem Hauptstoff um zurückgewonnene Kunststoffflaschen, Kunststoffröhren, Kunststoffbecher und andere Kunststoffbehälter handeln kann, die alle aus HDPE bestehen. Die genannten Kunststoffflaschen, Kunststoffröhren und Kunststoffbecher werden mit einer Zerkleinerungsmaschine zerkleinert, und anschließend mit einem Extruder zu kugelförmigem Kunststoffgranulat (als Haupt-Rohstoff) mit einer homogenen Größe für eine spätere Verwendung extrudiert. Der Kugeldurchmesser des Kunststoffgranulats beträgt 4 mm.
   (2) Auswahl von Pflanzenfasern als Hilfs-Rohstoff, wobei es sich bei den Pflanzenfasern um Flachs handelt, der in einem Mahlwerk zu einem Mehl mit 0,25 mm [60 Mesh]zerkleinert wird.
   (3) Bereitstellen von Mineralpulver von 0,29 mm [500 Mesh] als Füllstoff, wobei es sich bei dem Mineralpulver um Glimmerpulver handelt.
   (4) Auswahl einer chemischen Reagenz mit Kopplungswirkung als Zusatzstoff, wobei es sich bei dem Zusatzstoff um Maleinsäureanhydrid handelt.
Eine zweite Stufe zum Mischen von Materialien:
   Hierbei werden 30 Gewichtsprozent an Polyethylen hoher Dichte (HDPE) als Haupt-Rohstoff, 38 Gewichtsprozent an Flachs als Hilfs-Rohstoff, 30 Gewichtsprozent an Glimmerpulver als Füllstoff, und 2 Gewichtsprozent an Maleinsäureanhydrid als Zusatzstoff in eine Mischeinrichtung gegeben, erhitzt und mechanisch vermischt, und anschließend mit einem Extruder zu kugelförmigem Kunststoffgranulat mit homogener Größe extrudiert, zur späteren Verwendung aus Ausgangsmaterial für die Produktion des Kerns eines Profilkörpers 3. Der Kugeldurchmesser des Kunststoffgranulats beträgt 5 mm.
Eine dritte Stufe zur Produktion des Profilkörpers in einer Produktionslinie mit Coextrusionsanlagen:
   Die Produktionslinie der Coextrusionsanlage umfasst zwei große Teile. Der erste Teil ist ein Extruder mit einer Einschnecke oder einer Doppelschnecke. Am Ausgang des Extruders ist ein Coextrusionswerkzeug montiert, bei dem es sich um ein ummantelndes Profilwerkzeug handelt. Der zweite Teil ist eine Kühl- und Formanlage.
   Das in der zweiten Stufe erhaltene Ausgangsmaterial für die Produktion des Kerns des Profilkörpers wird in einen Trichter des Extruders gegeben. Gleichzeitig wird ein mit dem Material des Haupt-Rohstoffs übereinstimmender Kunststoff (Neukunststoff) als Ausgangsmaterial für die Schutzschicht in einen anderen Trichter des Extruders gegeben, wobei es sich bei dem Ausgangsmaterial für die Schutzschicht um Neukunststoff (reiner Kunststoff) des Materials Polyethylen hoher Dichte (HDPE) handelt. Der Extruder wird gestartet. Unter Verwendung des Coextrusionswerkzeugs werden das thermisch geschmolzene Ausgangsmaterial für den Kern und das Ausgangsmaterial für die Schutzschicht nach dem Prinzip der Coextrusion extrudiert, wobei die Extrusion des Kerns 1 und der Schutzschicht 2 synchron abgeschlossen wird. Während der Coextrusion gehen der Kern 1 und die Schutzschicht 2 aufgrund übereinstimmender thermoplastischer Eigenschaften eine enge Verbindung zu einer Einheit ein, wie in den Figuren 1 und 2 gezeigt, mit den Vorzügen einer festen Verbindung, einer hohen Festigkeit, einer Schallisolierung, einer guten Wärmedämmung, und einer guten Luftdichtheit und Wasserdichtheit. Nach Abkühlung und Formgebung in der Kühl- und Formanlage ist der Profilkörper 3 ausgebildet.
Eine vierte Stufe zur Durchführung einer Kaschierung:
   Beim Kaschieren werden die Dekorschichten 4 und 5 an dem Profilkörper 3 angebracht. Wie in den Figuren 3 und 4 gezeigt, sind die zu kaschierenden Oberflächen des Profilkörpers 3 dessen Raumaußenseite und Rauminnenseite. Bei diesem Ausführungsbeispiel sind die Dekorschichten 4 und 5 aus Holzdekorfolie gebildet.

Auf die Holzdekorfolie wird ein Klebstoff aufgetragen, die Holzdekorfolie wird an einer Arbeitsposition der Kaschiermaschine angeordnet, wobei dann der Profilkörper 3 auf einer Gleitbahn in einem Einlassbereich der Kaschiermaschine angeordnet wird und durch Antriebsmittel in die Kaschiermaschine hineingelangt. Die Holzdekorfolie verbindet sich in der Kaschiermaschine mittels Heisskleber mit dem Profilkörper 3, der als fertiges Produkt wie in den Figuren 5 und 6 dargestellt ausgetragen wird.

### Ausführungsbeispiel 5:

Erfindungsgemäß handelt es sich um ein Herstellungsverfahren für Verbundprofile aus Aluminium, Kunststoff und Holzfasern, umfassend folgende Stufen:
Eine erste Stufe zur Rohstoff-Vorbereitung, mit folgenden Schritten:
   (1) Auswahl von Altkunststoff oder Neukunststoff aus dem Material Polyethylen (PE) als Haupt-Rohstoff, wobei es sich bei dem Altkunststoff um zurückgewonnene Kunststoffflaschen, Kunststoffröhren, Kunststoffbecher und andere Kunststoffbehälter handeln kann, die alle aus Polyethylen (PE) bestehen. Die genannten Kunststoffflaschen, Kunststoffröhren und Kunststoffbecher werden mit einer Zerkleinerungsmaschine zerkleinert, und anschließend mit einem Extruder zu kugelförmigem Kunststoffgranulat (als Haupt-Rohstoff) mit einer homogenen Größe für eine spätere Verwendung extrudiert. Der Kugeldurchmesser des Kunststoffgranulats beträgt 3 mm.
   (2) Auswahl von Pflanzenfasern als Hilfs-Rohstoff, wobei es sich bei den Pflanzenfasern um Reisstrohmehl handelt, das in einem Mahlwerk zu einem Mehl mit 0,177 mm [80 Mesh] zerkleinert wird.
   (3) Bereitstellen von Mineralpulver von 0,0217 mm [600 Mesh] als Füllstoff, wobei es sich bei dem Mineralpulver um Talkpulver handelt.
   (4) Auswahl einer chemischen Reagenz mit Kopplungswirkung als Zusatzstoff, wobei es sich bei dem Zusatzstoff um Maleinsäureanhydrid handelt.
Eine zweite Stufe zum Mischen von Materialien:
   Hierbei werden 40 Gewichtsprozent an Polyethylen (PE) als Haupt-Rohstoff, 46 Gewichtsprozent an Reisstrohmehl als Hilfs-Rohstoff, 10 Gewichtsprozent an Talkpulver als Füllstoff, und 4 Gewichtsprozent an Maleinsäureanhydrid als Zusatzstoff, in eine Mischeinrichtung gegeben, erhitzt und mechanisch vermischt, und anschließend mit einem Extruder zu kugelförmigem Kunststoffgranulat mit homogener Größe extrudiert, zur späteren Verwendung als Ausgangsmaterial für die Produktion des Kerns eines Profilkörpers. Der Kugeldurchmesser des Kunststoffgranulats beträgt 4 mm.
Eine dritte Stufe zur Produktion des Profilkörpers in einer Produktionslinie mit Coextrusionsanlagen:
   Die Produktionslinie der Coextrusionsanlage umfasst zwei große Teile. Der erste Teil ist ein Extruder mit einer Einschnecke oder einer Doppelschnecke. Am Ausgang des Extruders ist ein Coextrusionswerkzeug vorgesehen, bei dem es sich um ein ummantelndes Profilwerkzeug handelt. Der zweite Teil ist eine Kühl- und Formanlage.

Das in der zweiten Stufe erhaltene Ausgangsmaterial für die Produktion des Kerns des Profilkörpers wird in einen Trichter des Extruders gegeben. Gleichzeitig wird ein mit dem Material des Haupt-Rohstoffs übereinstimmender Kunststoff (Neukunststoff) als Ausgangsmaterial für die Schutzschicht in einen anderen Trichter des Extruders gegeben, wobei es sich bei dem Ausgangsmaterial für die Schutzschicht um Neukunststoff (reiner Kunststoff) des Materials Polyethylen (PE) handelt. Der Extruder wird gestartet. Unter Verwendung eines Coextrusionswerkzeugs werden das thermisch geschmolzene Ausgangsmaterial für den Kern und das Ausgangsmaterial für die Schutzschicht nach dem Prinzip der Coextrusion extrudiert, um die Extrusion des Kerns und der Schutzschicht synchron zu realisieren. Während der Coextrusion gehen der Kern 1 und die Schutzschicht 2 aufgrund übereinstimmender thermoplastischer Eigenschaften eine enge Verbindung zu einer Einheit ein, wie in den Figuren 1 und 2 gezeigt, mit den Vorzügen einer festen Verbindung, einer hohen Festigkeit, einer Schallisolierung, einer guten Wärmedämmung, und einer guten Luftdichtheit und Wasserdichtheit. Nach Abkühlung und Formgebung in der Kühl- und Formanlage ist der Profilkörper 3 ausgebildet.

## Patentansprüche

1. Verbundprofil, umfassend einen Kern (1), der aus Mineralstoffen, Pflanzenfasern, Zusatzstoffen und Alt-Kunststoff eines einzigen Typs gebildet ist, wobei an einer äußeren Oberfläche des Kerns (1) eine Schutzschicht (2) angeordnet ist, die die äußere Oberfläche des Kerns (1) vollständig umhüllt,
wobei der Kunststoff der Schutzschicht (2) und der Kunststoff des Kerns (1) vom gleichen Typ sind, wobei der Kern (1) und die Schutzschicht (2) nach dem Prinzip der Coextrusion hergestellt sind,
**dadurch gekennzeichnet,**
**dass**
die Schutzschicht (2) aus einer Schicht aus reinem Neukunststoff eines einzigen Typs gebildet ist, und
**dass** eine Außenseite der Schutzschicht (2) mit einer Dekorschicht aus Aluminiumfolie (4, 5) beklebt ist.

2. Verbundprofil nach Anspruch 1, **dadurch gekennzeichnet, dass** die Pflanzenfasern aus einem oder mehreren Materialien der Gruppe bestehend aus Baummaterial, Bambus, Sägespänen, Reisstroh, Flachs, Ramie und Stielen gewählt sind.

3. Verbundprofil nach Anspruch 1 oder 2, **dadurch gekennzeichnet, dass** die Mineralstoffe aus einem oder zwei Materialien aus der Gruppe bestehend aus Kalk, Asbest, Glimmer, Kreide, Talk, Kalziumkarbonat und Glasfasern gewählt sind.

4. Verbundprofil nach einem der Ansprüche 1 bis 3, **dadurch gekennzeichnet, dass** die Zusatzstoffe Maleinsäureanhydrid (MSA) aufweisen.

5. Verfahren zur Herstellung eines Verbundprofils, umfassend folgende Stufen:
- eine erste Stufe zur Rohstoff-Vorbereitung, mit folgenden Schritten:
(1) Auswahl von Altkunststoff als Haupt-Rohstoff, wobei es sich bei dem Haupt-Rohstoff um ein beliebiges Material aus der Gruppe bestehend aus Polypropylen, Polyethylen, Polyvinylchlorid und HDPE handelt,
(2) Auswahl von Pflanzenfasern als Hilfs-Rohstoff, wobei die Pflanzenfasern in einem Mahlwerk zu einem Mehl mit 0,42 mm - 0,18 mm [40 - 80 Mesh] zerkleinert werden,
(3) Bereitstellen von Mineralpulver von 0,0481 mm - 0,0172 mm [300 - 800 Mesh] als Füllstoff,
(4) Auswahl einer chemischen Reagenz mit Kopplungswirkung als Zusatzstoff;
- eine zweite Stufe zum Mischen von Materialien,
wobei 30-55 Gewichtsprozent an Haupt-Rohstoff, 38-55 Gewichtsprozent an Hilfs-Rohstoff, 5-30 Gewichtsprozent an Füllstoff und 2-6 Gewichtsprozent an Zusatzstoff in eine Mischeinrichtung gefüllt und erhitzt und mechanisch vermischt werden, und anschließend zu Granulat verarbeitet werden, als Ausgangsmaterial für die Produktion des Kerns (1) eines Profilkörpers (3);
- eine dritte Stufe zur Produktion des Profilkörpers in einer Coextrusionsanlage, mit folgenden Schritten:
∘ Einbringen des in der zweiten Stufe erhaltenen Ausgangsmaterials in einen Trichter eines Extruders für die Produktion des Kerns des Profilkörpers,
∘ gleichzeitiges Einbringen eines reinen Neukunststoffs vom gleichen Typ wie der Haupt-Rohstoff in einen anderen Trichter des Extruders als Ausgangsmaterial für die Schutzschicht,
∘ Starten des Extruders,
∘ Extrudieren des geschmolzenen Ausgangsmaterials für den Kern und des geschmolzenen Ausgangsmaterials für die Schutzschicht nach dem Prinzip der Coextrusion unter Verwendung eines Coextrusionswerkzeugs, um die Extrusion des Kerns und der Schutzschicht synchron zu realisieren, und
∘ anschließendes Abkühlen und Ausformen in einer Kühl- und Formanlage zur Erzeugung des Profilkörpers,
wobei der Kern und die Schutzschicht während der Coextrusion aufgrund übereinstimmender thermoplastischer Eigenschaften zu einem integrierten Körper fest verbunden werden; und
- eine vierte Stufe zur Ausbildung einer Folienkaschierung, mit folgenden Schritten:
- Auftragen eines Klebstoffs auf eine Aluminiumfolie (4, 5),
- Anordnen der Aluminiumfolie (4, 5) an einer Arbeitsposition einer Kaschiermaschine,
- Anordnen des in der dritten Stufe produzierten Profilkörpers (3) auf einer Führungseinrichtung in einem Einlassbereich der Kaschiermaschine,
- Hineinführen des Profilkörpers in die Kaschiermaschine durch Antriebsmittel,
- Verbinden der Aluminiumfolie (4, 5) mit dem Profilkörper (3) in der Kaschiermaschine mittels Heisskleber, und
- Austragen des Profilkörpers (3) als fertiges Produkt mit einer Dekorschicht (4, 5).

6. Herstellungsverfahren nach Anspruch 5, **dadurch gekennzeichnet, dass** der Hilfs-Rohstoff in Form der Pflanzenfasern aus einem oder mehreren Materialien der Gruppe bestehend aus Baummaterial, Bambus, Sägespänen, Reisstroh, Flachs, Ramie und Stielen gewählt ist.

7. Herstellungsverfahren nach Anspruch 5 oder 6, **dadurch gekennzeichnet, dass** der Füllstoff in Form der Mineralpulver aus einem oder zwei Materialien aus der Gruppe bestehend aus Kalk, Asbest, Glimmer, Kreide, Talk, Kalziumkarbonat und Glasfasern gewählt ist.

8. Herstellungsverfahren nach einem der Ansprüche 5 bis 7, **dadurch gekennzeichnet, dass** der Zusatzstoff Maleinsäureanhydrid (MSA) aufweist.

## Claims

1. A composite profile, comprising a core (1) which is made from mineral substances, plant fibers, additives and used plastics of a single type, wherein a protective layer (2) is disposed on an outer surface of the core (1) which entirely encompasses the outer surface of the core (1),
wherein the plastic of the protective layer (2) and the plastic of the core (1) are of the same type, wherein the core (1) and the protective layer (2) are produced according to the principle of coextrusion,
**characterized in**
**that** the protective layer (2) is made from a layer of pure new plastic of a single type, and
**that** a decorative layer of aluminium foil (4, 5) is glued onto the outside of the protective layer (2).

2. The composite profile according to claim 1, **characterized in that** the plant fibers are selected from one or more of the materials of the group consisting of tree material, bamboo, sawdust, rice straw, flax, ramie and stems.

3. The composite profile according to claim 1 or 2, **characterized in that** the mineral substances are selected from one or two materials from the group consisting of lime, asbestos, mica, chalk, talc, calcium carbonate and glass fibers.

4. The composite profile according to claim 1 to 3, **characterized in that** the additives comprise maleic anhydride (MSA).

5. A method for producing of a composite profile comprising the following stages:
- a first stage for raw material preparation, with the following steps:
(1) Selecting of old plastic as a main raw material, wherein the main raw material is any material from the group consisting of polypropylene, polyethylene, polyvinyl chloride and HDPE,
(2) Selecting of plant fibers as an auxiliary raw material, wherein the plant fibers are shred into flour with 0.42 mm to 0.18 mm [40 to 80 mesh] in a grinder,
(3) Providing of mineral powder of 0.0481 mm to 0.0172 mm [300 to 800 mesh] as a filling material,
(4) Selecting of a chemical reagent with coupling effect as an additive;
- a second stage for mixing materials,
wherein 30 to 55 % by weight of main raw material, 38 to 55 % by weight of auxiliary raw material, 5 to 30 % by weight of filling material and 2 to 6 % by weight of additive are filled into a mixing device and heated and mechanically mixed, and subsequently processed into granules as a starting material for the production of the core (1) of a profile body (3);
- a third stage for the production of a profile body in a coextrusion plant, with the following steps:
∘ introducing of the starting material obtained in the second step into a hopper of an extruder for the production of the core of the profile body,
∘ simultaneously introducing of a pure new plastic of the same type as the main raw material into another hopper of the extruder as a starting material for the protective layer,
∘ starting of the extruder,
∘ extruding of the molten starting material for the core and the molten starting material for the protective layer according to the principle of coextrusion by using a coextrusion tool in order to realize the extrusion of the core and the protective layer synchronously, and
∘ subsequent cooling and molding in a cooling and molding plant for the production of the profile body,
wherein the core and the protective layer during coextrusion due to consistent thermoplastic properties are firmly connected into an integrated body; and
- a fourth stage for formation of a foil lamination, with the following steps:
- applying an adhesive on an aluminium foil (4, 5),
- arranging of the aluminium foil (4, 5) on a working position of a laminating machine,
- arranging of the profile body (3) produced in the third step on a guiding means in an inlet area of the laminating machine,
- introducing the profile body into the laminating machine by driving means,
- connecting the aluminium foil (4, 5) with the profile body (3) in the laminating machine by means of a hot melt adhesive, and
- discharging the profile body (3) as finished product with a decorative layer (4, 5).

6. The method according to claim 5, **characterized in that** the auxiliary raw material in the form of plant fibers is selected from one or more materials of the group consisting of tree material, bamboo, saw-dust, rice straw, flax, ramie and stems

7. The method according to claim 5 or 6, **characterized in that** the filling material in the form of mineral powders is selected from one or two materials from the group consisting of lime, asbestos, mica, chalk, talc, calcium carbonate and glass fibers.

8. The method according to any one of claims 5 to 7, **characterized in that** the additive comprises maleic anhydride (MSA).

## Revendications

1. Profilé en composite comportant un noyau (1) formé des minéraux, des fibres végétales, des additifs et du vieux plastique d'un seul type, une couche protectrice (2) étant disposée sur une surface externe du noyau (1) enveloppant entièrement la surface externe du noyau (1),
le plastique de la couche protectrice (2) et le plastique du noyau (1) étant du même type, le noyau (1) et la couche protectrice (2) étant fabriqué selon le principe de la coextrusion,
**caractérisé en ce**
**que** la couche protectrice (2) est formée d'une couche de pur plastique neuf d'un seul type, et
**qu'une** couche décorative de la feuille d'aluminium (4, 5) est placée par collage au côté extérieur de la couche protectrice (2).

2. Profilé en composite selon la revendication 1, **caractérisé en ce que** les fibres végétales sont sélectionnées d'un ou plusieurs matériaux du groupe consistant en matériel d'arbres, bambou, copeaux de bois, paille de riz, lin, ramie et tiges.

3. Profilé en composite selon la revendication 1 ou 2, **caractérisé en ce que** les minéraux sont sélectionnés d'un ou deux matériaux du groupe consistant en chaux, amiante, mica, craie, talc, carbonate de calcium et fibres de verre.

4. Profilé en composite selon l'une quelconque des revendications 1 à 3, **caractérisé en ce que** les additifs comportent du anhydride maléique (MSA).

5. Procédé de fabrication d'un profilé en composite comportant les étapes suivantes:
- une première étape pour la préparation de la matière première, avec les pas suivants:
(1) sélection du vieux plastique en tant que matière première principale, la matière première principale étant toute matière du groupe consistant en polypropylène, polyéthylène, chlorure de polyvinyle et HDPE,
(2) sélection des fibres végétales en tant que matière première auxiliaire, les fibres végétales étant broyées sous forme de la farine avec 0,42 mm à 0,18 mm [40 à 80 mesh] dans un broyeur,
(3) fourniture de poudre minérale de 0,0481 mm à 0,0172 mm [300 à 800 mesh] en tant qu'agent de charge,
(4) sélection d'un réactif chimique avec action de couplage en tant qu'additif,
- une deuxième étape pour mélanger des matériaux, 30 à 55 % en poids de la matière première principale, 38 à 55 % en poids de la matière première auxiliaire, 5 à 30 % en poids d'agent de charge et 2 à 6 % en poids d'additif sont remplis dans un mélangeur et chauffés et mélangés mécaniquement, et ensuite transformés en granules, en tant que matière de départ pour la production du noyau (1) d'un corps profilé (3);
- une troisième étape pour la production du corps profilé dans une installation de coextrusion, avec les pas suivants:
∘ introduction de la matière de départ obtenue dans la deuxième étape dans la trémie d'une extrudeuse pour la production du noyau du corps profilé,
∘ introduction simultanée d'un pur plastique neuf du même type comme la matière première principale dans une autre trémie de l'extrudeuse en tant que matière de départ pour la couche protectrice,
∘ démarrage de l'éxtrudeuse,
∘ extrusion de la matière de départ fondue pour le noyau et de la matière de départ pour la couche protectrice selon le principe de la coextrusion en utilisant un outil de coextrusion pour réaliser l'extrusion du noyau et de la couche protectrice de manière synchrone, et
∘ ensuite refroidissement et moulage dans un système de refroidissement et de moulage pour la production du corps profilé,
le noyau et la couche protectrice pendant la coextrusion en vertu des propriétés thermoplastiques correspondantes étant fermement reliées en un corps intégré; et
- une quatrième étape pour la formation d'un laminage feuille, avec les pas suivants:
- application d'un adhésif sur une feuille d'aluminium (4, 5),
- disposition de la feuille d'aluminium (4, 5) à une position de travail d'une machine de laminage,
- disposition du corps profilé (3) produit dans la troisième étape sur un dispositif de guidage dans une zone d'entrée de la machine de laminage,
- introduction du corps profilé dans la machine de laminage par des moyens d'entraînement,
- raccordement de la feuille d'aluminium (4, 5) avec le corps profilé (3) dans la machine de laminage au moyen d'un adhésif thermofusible, et
- déchargement du corps profilé (3) en tant que produit fini avec une couche décorative (4, 5).

6. Procédé de fabrication selon la revendication 5, **caractérisé en ce que** la matière première auxiliaire sous forme des fibres végétales est sélectionnée d'un ou plusieurs matériaux du groupe consistant en matériel d'arbres, bambou, copeaux de bois, paille de riz, lin, ramie et tiges.

7. Procédé de fabrication selon la revendication 5 ou 6, **caractérisé en ce que** l'agent de charge sous forme des poudres minérales est sélectionné d'un ou deux matériau(x) du groupe consistant en chaux, amiante, mica, craie, talc, carbonate de calcium et fibres de verre.

8. Procédé de fabrication selon l'une quelconque des revendications 5 à 7, **caractérisé en ce que** l'additif comprend de l'anhydride maléique (MSA).
